**Europäisches Patentamt**

**European Patent Office**

**Office européen des brevets**

(19)

(11) Veröffentlichungsnummer : **0 379 016 B1**

# (12) EUROPÄISCHE PATENTSCHRIFT

(45) Veröffentlichungstag der Patentschrift :
**12.05.93 Patentblatt 93/19**

(51) Int. Cl.$^5$ : **C01B 17/58**

(21) Anmeldenummer : **90100248.5**

(22) Anmeldetag : **06.01.90**

(54) **Verfahren zum thermischen Zersetzen von Metallsulfaten.**

(30) Priorität : **19.01.89 DE 3901459**

(43) Veröffentlichungstag der Anmeldung :
**25.07.90 Patentblatt 90/30**

(45) Bekanntmachung des Hinweises auf die
Patenterteilung :
**12.05.93 Patentblatt 93/19**

(84) Benannte Vertragsstaaten :
**DE ES FR GB IT NL**

(56) Entgegenhaltungen :
**DE-B- 1 173 074**
**ULLMANNS ENCYCLOPAEDIE DER TECHNI-**
**SCHEN CHEMIE, Band 18, 4. Auflage, 1978,**
**Seiten 579, 580, Weinheim, DE**

(73) Patentinhaber : **BAYER AG**
**W-5090 Leverkusen 1 Bayerwerk (DE)**

(72) Erfinder : **Lailach, Günter, Dr.**
**Bismarckstrasse 109**
**W-4150 Krefeld (DE)**
Erfinder : **Gerken, Rudolf, Dr.**
**Rather Strasse 79**
**W-4150 Krefeld (DE)**

EP 0 379 016 B1

## Beschreibung

Die vorliegende Erfindung betrifft ein Verfahren zur thermischen Zersetzung von Metallsulfatgemischen bei Temperaturen von 800 bis 1100°C unter oxidierenden Bedingungen, bei dem die Metallsulfatgemische mit Abbrand vermischt und zusammen mit Brennstoffen im Zersetzungsreaktor unter Bildung von Abbrand und $SO_2$-haltigen Röstgasen zur Reaktion gebracht werden.

Metallsulfate, insbesondere schwefelsäurehaltige Metallsulfatgemische, fallen bei verschiedenen Prozessen als Reststoffe an. Besonders für die vorwiegend eisensulfathaltigen Metallsulfatgemische, die bei der Wiedergewinnung der Schwefelsäure aus der bei der $TiO_2$-Herstellung nach dem Sulfatprozeß anfallenden Dünnsäure abgetrennt werden, gibt es keine nennenswerten Verwendungsmöglichkeiten.

Als einzige umweltverträgliche Entsorgungsmöglichkeit für diese Zwangsanfallprodukte kommt bisher die thermische Zersetzung zu $SO_2$, $O_2$ und Metalloxiden (im folgenden Abbrand genannt) bei Temperaturen von 800 bis 1100°C in Betracht (Ullmanns Encyclopädie der technischen Chemie, 4. Aufl. Bd. 18, S. 579-580, Verlag Chemie, Weinheim, 1978). Dabei wirkt sich aber ein Gehalt an Magnesiumsulfat negativ aus, weil dieses nur bei reduzierenden Bedingungen im technisch relevanten Temperaturbereich ausreichend schnell zersetzt wird. Reduzierende Bedingungen, wie sie in DE-A 1 173 074 vorgeschlagen werden, lassen sich aber in den für diesen Prozeß vorteilhaften Fließbettreaktoren kaum realisieren.

Üblicherweise werden die Metallsulfate mit den Brennstoffen, die für die stark endotherme Zersetzungsreaktion erforderlich sind, in den Fließbettreaktor eingetragen. Von unten wird so viel Luft oder Luft-Sauerstoff-Gemisch durch ein stationäres Fließbett aus grobem Abbrand geblasen, daß die oben aus dem Reaktor austretenden Gase einen geringen Sauerstoffgehalt im Bereich von 0,5 bis 2 Vol-% haben. Unter reduzierenden Bedingungen enthalten diese Gase elementaren Schwefel, bei höherem Sauerstoffgehalt deutliche Mengen $SO_3$, was beides unerwünscht ist. Die Gase enthalten unter Normalbedingungen außer $SO_2$, $O_2$, $H_2O$, $N_2$ und gegebenenfalls $CO_2$ nahezu den gesamten Abbrand als Staub.

Üblicherweise werden die Gase im Abhitzekessel von 800 bis 1100°C auf 300 bis 350°C abgekühlt, wobei sich ein wesentlicher Teil des Abbrandes abscheidet. Die feinteiligeren Abbrandanteile werden in einer elektrostatischen Gasreinigungsanlage (EGR) aus dem Gasstrom entfernt, bevor dieser einer Naßwäsche unterworfen wird.

Aufgabe dieser Erfindung ist die Bereitstellung eines Verfahrens, welches die beschriebenen Nachteile nicht aufweist.

Es wurde nun gefunden, daß die Zersetzungsreaktion im Fließbettreaktor vorteilhaft beeinflußt wird, wenn die Metallsulfate mit feinteiligem Abbrand aus der EGR gemischt werden. Insbesondere wird beim erfindungsgemäßen Verfahren die Bildung von grobem Abbrand gefördert, der für den Erhalt des stationären Fließbettes wichtig ist.

Gegenstand dieser Erfindung ist somit ein Verfahren zur thermischen Zersetzung von Metallsulfatgemischen im Fließbettreaktor bei Temperaturen von 800 bis 1100°C unter oxidierenden Bedingungen, bei dem die Metallsulfatgemische mit zurückgeführtem Abbrand und mit Brennstoffen vermischt werden, gegebenenfalls granuliert werden, und im Zersetzungsreaktor unter Bildung von Abbrand und $SO_2$-haltigen Röstgasen zur Reaktion gebracht werden, wobei die feinteilige Fraktion des so gebideten Abbrandes, die in einer elektrostatischen Gasreinigung aus dem Gasstorm entfernt wird, als zurückgeführter Abbrand verwendet wird.

Weiterhin wird nicht nur die Bildung groben Abbrandes positiv beeinflußt, sondern insbesondere der Gehalt des Abbrandes an unzersetzten wasserlöslichen Sulfaten deutlich vermindert.

Durch die Anwendung des erfindungsgemäßen Verfahrens kann der Gehalt der wasserlöslichen Metallsulfate im Abbrand wesentlich vermindert werden. In einer bevorzugten Ausführungsform des erfindungsgemäßen Verfahrens werden die Brennstoffe und der feinteilige Abbrand vor der Einspeisung in den Zersetzungsreaktor gemischt. Besonders vorteilhaft ist die Anwendung dieses Verfahrens, wenn die Metallsulfate vor der thermischen Zersetzung zusammen mit den Brennstoffen und dem feinteiligen Abbrand kompaktiert, z.B. pelletiert werden. Als Brennstoffe im Sinne dieser Erfindung gelten nicht nur Kohle, Teer, Melasse usw., sondern auch Pyrit oder Schwefel.

In einer besonders bevorzugten Ausführungsform enthalten die Metallsulfatgemische als Feuchte Schwefelsäure mit 5 bis 96 Gew.-% $H_2SO_4$.

Die Vorteile des erfindungsgemäßen Verfahrens sollen anhand der Beispiele verdeutlicht werden, ohne daß hierin eine Einschränkung zu sehen ist.

Vergleichsbeispiel

Bei der Aufarbeitung von Dünnsäure, die bei der $TiO_2$-Herstellung nach dem Sulfatverfahren anfiel, wurde ein schwefelsäurehaltiges Metallsulfatgemisch folgender Zusammensetzung abgetrennt (alle Angaben als

EP 0 379 016 B1

Gew.-%).

$$26,7 \ \% \ FeSO_4 \cdot H_2O \qquad 6,8 \ \% \ Al_2(SO_4)_3 \cdot H_2SO_4 \cdot 8 \ H_2O$$
$$28,7 \ \% \ Fe_2H_2(SO_4)_3 \cdot H_2O \qquad 2,8 \ \% \ Fe_2(SO_4)_3 \cdot H_2SO_4 \cdot 8 \ H_2O$$
$$9,1 \ \% \ MgSO_4 \cdot H_2O \qquad 0,7 \ \% \ VOSO_4$$
$$1,8 \ \% \ MnSO_4 \cdot H_2O \qquad 0,6 \ \% \ Cr_2(SO_4)_3$$
$$7,3 \ \% \ TiOSO_4 \qquad 0,5 \ \% \ CaSO_4$$
$$0,1 \ \% \ Na_2SO_4$$
$$9,7 \ \% \ H_2SO_4$$
$$5,2 \ \% \ H_2O$$

Metallsulfatgemisch, Kohle und Abbrand wurden im Gewichtsverhältnis 1:0,3:0,1 gemischt und gemäß DE-A 1 173 074 zu Grünpellets verformt. Als Abbrand wurde ein Teil des insgesamt bei der thermischen Zersetzung anfallenden Abbrandes verwendet. Die Grünpellets wurden aus einem Dosierbunker in den Fließbettreaktor eingespeist und bei 980 ± 5° C zur Reaktion gebracht.

Der nach dem Erreichen stationärer Bedingungen aus der Anlage abgezogene Abbrand hatte folgende Zusammensetzung:

$$39,8 \ \% \ Fe \qquad 0,3 \ \% \ Cr$$
$$1,5 \ \% \ Al \qquad 0,6 \ \% \ Ca$$
$$3,9 \ \% \ Mg \qquad 0,1 \ \% \ Na$$
$$5,1 \ \% \ Ti \qquad 1,2 \ \% \ SiO_2$$
$$1,5 \ \% \ Mn \qquad 8,8 \ \% \ SO_4^{2-}$$
$$0,5 \ \% \ V \qquad 12,0 \ \% \ H_2O$$

Beispiel

Ein Metallsulfatgemisch (analog dem Vergleichsbeispiel) wurde mit Kohle und Abbrand im Gewichtsverhältnis 1:0,3:0,1 gemischt, wobei jedoch nicht ein Teil des Gesamtabbrandes, sondern nur Abbrand aus der EGR eingesetzt wurde. Die weitere Verarbeitung und die Zersetzungsreaktion erfolgten unter den gleichen Bedingungen wir im Vergleichsbeispiel.

Der aus der Anlage abgezogene und nicht zurückgeführte Abbrand hatte folgende Zusammensetzung:

$$41,1 \ \% \ Fe \qquad 0,3 \ \% \ Cr$$
$$1,6 \ \% \ Al \qquad 0,6 \ \% \ Ca$$
$$4,0 \ \% \ Mg \qquad 0,1 \ \% \ Na$$
$$5,3 \ \% \ Ti \qquad 1,2 \ \% \ SiO_2$$
$$1,6 \ \% \ Mn \qquad 4,8 \ \% \ SO_4^{2-}$$
$$0,5 \ \% \ V \qquad 12,0 \ \% \ H_2O$$

**Patentansprüche**

1.  Verfahren zur thermischen Zersetzung von Metallsulfatgemischen im Fließbettreaktor bei Temperaturen von 800 bis 1100°C unter oxidierenden Bedingungen, bei dem die Metallsulfatgemische mit Abbrand ver-

3

mischt und zusammen mit Brennstoffen im Zersetzungsreaktor unter Bildung von Abbrand und $SO_2$-haltigen Röstgasen zur Reaktion gebracht werden, dadurch gekennzeichnet, daß die feinteilige Fraktion des so gebildeten Abbrandes, in einer elektrostatischen Gasreinigung abgeschieden wird und in den Zersetzungsreaktor zurückgeführt wird.

2. Verfahren gemäß Anspruch 1, dadurch gekennzeichnet, daß das Metallsulfatgemisch, die Brennstoffe und der feinteilige Abbrand vor der Einspeisung in den Zersetzungsreaktor gemischt werden.

3. Verfahren gemäß Anspruch 2, dadurch gekennzeichnet, daß die Mischung vor der Einspeisung in den Zersetzungsreaktor kompaktiert wird.

4. Verfahren gemäß einem oder mehrerer der Ansprüche 1 bis 3, dadurch gekennzeichnet, daß die Metallsulfatgemische als Feuchte Schwefelsäure mit 5 bis 96 Gew.-% $H_2SO_4$ enthalten.

## Claims

1. A process for the thermal decomposition of metal sulfate mixtures under oxidizing conditions in a fluidized bed reactor at temperatures of 800 to 1,100°C, in which the metal sulfate mixtures are mixed with recycled residue and mixed with fuels, optionally granulated and reacted in the decomposition reactor with formation of residue and $SO_2$-containing roasting gases, characterized in that the fine-particle fraction of the residue thus formed, which is removed from the gas stream in an electrostatic gas cleaning stage, is used as the recycled residue.

2. A process as claimed in claim 1, characterized in that the metal sulfate mixture, the fuels and the fine-particle residue are mixed before introduction into the decomposition reactor.

3. A process as claimed in claim 2, characterized in that the mixture is compacted before introduction into the decomposition reactor.

4. A process as claimed in one or more of claims 1 to 3, characterized in that the metal sulfate mixtures contain sulfuric acid in a concentration of 5 to 96% by weight $H_2SO_4$ as moisture.

## Revendications

1. Procédé de décomposition thermique de mélanges de sulfates de métaux dans un réacteur à lit fluide à des températures de 800 à 1100°C dans des conditions oxydantes, dans lequel les mélanges de sulfates métalliques sont mélangés avec des résidus de grillage recyclés et avec des combustibles, ils sont éventuellement granulés et mis en réaction dans le réacteur de décomposition avec formation de résidu de grillage et de gaz de grillage contenant du $SO_2$, caractérisé en ce que la fraction en fines particules du résidu de grillage ainsi formé, qui est éliminée du courant de gaz dans une opération de purification électrostatique du gaz, est utilisée comme résidu de grillage recyclé.

2. Procédé suivant la revendication 1, caractérisé en ce que le mélange de sulfates métalliques, les combustibles et le résidu de grillage en fines particules sont mélangés avant leur introduction dans le réacteur de décomposition.

3. Procédé suivant la revendication 2, caractérisé en ce que le mélange est compacté avant son introduction dans le réacteur de décomposition.

4. Procédé suivant une ou plusieurs des revendications 1 à 3, caractérisé en ce que les mélanges de sulfates de métaux contiennent, comme humidité, de l'acide sulfurique ayant une teneur en $H_2SO_4$ de 5 à 96 % en poids.